# EUROPEAN PATENT SPECIFICATION

(11) **EP 4 563 373 B1**
(45) Date of publication and mention of the grant of the patent: **04.03.2026**
(21) Application number: 23212642.5
(22) Date of filing: 28.11.2023
(51) Int. Cl.: B60C 27/00, B60C 27/14, B62D 61/12, B60G 17/017

(54) **WHEEL POSITIONING FOR TYRE CHAIN DEPLOYMENT**
RADPOSITIONIERUNG FÜR REIFENKETTENEINSATZ
POSITIONNEMENT DE ROUE POUR DÉPLOIEMENT DE CHAÎNE DE PNEU

(43) Date of publication of application: 04.06.2025
(73) Proprietor: VOLVO TRUCK CORPORATION, 405 08 Göteborg (SE)
(72) Inventor: GELSO, Esteban, 421 51 Västra Frölunda (SE); LAINE, Leo, 414 84 Göteborg (SE); ASHOK, Nrupathunga, 417 21 Göteborg (SE)
(74) Representative: Ström & Gulliksson AB

(56) References cited:
- WO-A1-02/092366
- US-A- 4 338 988
- US-A1- 2008 236 437
- US-B1- 7 278 456
- US-B2- 11 090 988

## Description

### TECHNICAL FIELD

The invention relates generally to vehicle control. In particular aspects, the disclosure relates to wheel positioning for tyre chain deployment. The invention can be applied to heavy-duty vehicles, such as trucks, buses, and construction equipment, among other vehicle types. Although the invention may be described with respect to a particular vehicle, the disclosure is not restricted to any particular vehicle.

### BACKGROUND

Tyre chains are devices fitted to the tyres of vehicles to provide increased traction in certain situations, for example when driving through snow, ice, or mud, or driving on a slope. In some places, tyre chains are mandatory during certain parts of the year. To attach tyre chains, an operator of a vehicle typically positions unconnected chains over or near the wheels of a vehicle, drive the vehicle forward or backward so that the chains are passed around the wheel, and then connect the chains so that they are attached to the wheel. This process is time consuming and cumbersome, especially in adverse weather conditions (snowy, cold, wet, etc.). Precise movement of the vehicle is required, which may be difficult due to limited space in the surroundings or traction problems caused by a slippery surface (e.g. snow or ice).

Systems to facilitate the process of attaching or detaching a tyre chain are known from US4338988 A, WO02092366 A1, US11090988 B2, US2008236437 A1 and US7278456 B1.

It is therefore desired to provide systems, methods and other approaches that attempt to resolve or at least mitigate one or more of these issues.

### SUMMARY

This invention provides systems, methods and other approaches for positioning at least one wheel of a vehicle to enable deployment (attachment to or detachment from the wheel) of tyre chains. In particular, an operator may provide inputs relating to respective steps of a tyre chain deployment process (for example, initiate tyre chain deployment, rotate wheel, steer wheel, raise wheel, etc.). In response to receiving an input, an appropriate action may be performed. In particular, an operator may provide an input relating to rotation of a wheel and the wheel is rotated. In some examples, a vertical load the wheel may be decreased, and/or the vertical position of the wheel may be raised, before the wheel is rotated and the chain is attached or detached. Rotating the wheel may facilitate the process of attaching or detaching a chain, in particular in combination with lifting or reducing the load on the wheel. This reduces the time required to complete the process and can ensure sufficiently precise movement of the vehicle where necessary.

According to a first aspect of the invention, there is provided a computer system comprising processing circuitry configured to receive a message relating to a wheel rotation step of a tyre chain deployment process for a vehicle, and, in response to receiving the message, cause a rotation of the at least one wheel of the vehicle.

The first aspect of the invention may seek to provide a more efficient and less cumbersome process for deployment of tyre chains. Rotating the wheel in response to an input from a vehicle operator may facilitate the process of attaching or detaching a chain, in particular in combination with lifting or reducing the load on the wheel. The tyre chain deployment process can be completed without the operator having to enter the vehicle, engage/disengage the parking brake, drive the vehicle forwards or backwards, and then exit the vehicle to connect the remainder of the chain. This reduces the time required to complete the process and can ensure sufficiently precise movement of the vehicle where necessary.

Optionally in some examples, including in at least one preferred example, the rotation is a specific angular rotation of the at least one wheel of the vehicle. A technical benefit may include that a precise rotation of the wheel can be implemented corresponding to the rotation required to deploy the chain, meaning that the tyre chain deployment process can be employed when there is limited space in the surroundings or there are traction problems caused by a slippery surface.

Optionally in some examples, including in at least one preferred example, the processing circuitry is further configured to cause braking of one or more other wheels of the vehicle while the at least one wheel is rotated. A technical benefit may include ensuring that the vehicle does not move while the wheel is rotated, which is advantageous in instances where there is limited space.

Optionally in some examples, including in at least one preferred example, the processing circuitry is further configured to cause a steering angle to be applied to the at least one wheel of the vehicle. A technical benefit may include that a wheel can be turned inwards or outwards to provide better access to the connections of the chain.

Optionally in some examples, including in at least one preferred example, the processing circuitry is further configured to cause a vertical load on at least one wheel of the vehicle to be decreased or increased. A technical benefit may include enabling easier rotation of the wheel, for example without moving the vehicle, which is advantageous in instances where there is limited space.

Optionally in some examples, including in at least one preferred example, the processing circuitry is further configured to cause a vertical position of at least one wheel of the vehicle to be raised or lowered. A technical benefit may include enabling easier rotation of the wheel, for example without moving the vehicle, which is advantageous in instances where there is limited space or there are traction problems due to slippery surfaces.

Optionally in some examples, including in at least one preferred example, the processing circuitry is configured to receive a first message relating to a first step of the tyre chain deployment process for the vehicle and, in response to receiving the first message, cause a vertical load on at least one wheel of the vehicle to be decreased and/or a vertical position of at least one wheel of the vehicle to be raised, receive the message relating to a wheel rotation step as a second message relating to a second step of the tyre chain deployment process for the vehicle and, in response to receiving the second message, cause the rotation of the at least one wheel of the vehicle receive a third message relating to a third step of the tyre chain deployment process for the vehicle, and, in response to receiving the third message, cause a vertical load on the at least one wheel of the vehicle to be increased and/or a vertical position of the at least one wheel of the vehicle to be lowered. A technical benefit may include that a tyre chain deployment process can be completed without the operator having to re-enter the vehicle, and in which a wheel can be rotated more easily, providing a more efficient tyre chain deployment process that can be employed in instances where there is limited space and traction problems due to slippery surfaces are avoided.

Optionally in some examples, including in at least one preferred example, the processing circuitry is configured to receive the message via a user interface of the vehicle or a user device of a vehicle operator. A technical benefit may include that the operator can control the entire tyre chain deployment process without having to enter the vehicle and exit the vehicle.

Optionally in some examples, including in at least one preferred example, the message comprises a user input to a touch screen, a user gesture captured by a camera, or a voice command captured by a microphone. A technical benefit may include that the operator can control the entire tyre chain deployment process in a number of different ways, without having to enter the vehicle and exit the vehicle.

Optionally in some examples, including in at least one preferred example, the at least one wheel of the vehicle is an individual wheel of the vehicle or comprises two wheels on a common axle of the vehicle. A technical benefit may include that a tyre chain deployment process can be employed for different combinations of wheels and axles, therefore providing enhanced flexibility.

Optionally in some examples, including in at least one preferred example, the at least one wheel of the vehicle is a driven wheel of the vehicle. A technical benefit may include that a tyre chain deployment process can be employed for the wheels of a vehicle that provide traction, therefore improving overall control of the vehicle.

According to a second aspect of the invention, there is provided a vehicle comprising the computer system. The second aspect of the invention may seek to provide a vehicle for which a more efficient and less cumbersome process for deployment of tyre chains is available.

According to a third aspect of the invention, there is provided a computer-implemented method comprising, by processing circuitry of a computer system, receiving a message relating to a wheel rotation step of a tyre chain deployment process for a vehicle, and, in response to receiving the message, causing a rotation of the at least one wheel of the vehicle.

The third aspect of the disclosure may seek to provide a more efficient and less cumbersome process for deployment of tyre chains. Rotating the wheel in response to an input from a vehicle operator may facilitate the process of attaching or detaching a chain, in particular in combination with lifting or reducing the load on the wheel. The tyre chain deployment process can be completed without the operator having to enter the vehicle, engage/disengage the parking brake, drive the vehicle forwards or backwards, and then exit the vehicle to connect the remainder of the chain. This reduces the time required to complete the process and can ensure sufficiently precise movement of the vehicle where necessary.

According to a fourth aspect of the invention, there is provided a computer program product comprising program code for performing, when executed by processing circuitry, the computer-implemented method. A technical benefit may include that new vehicles and/or legacy vehicles may be conveniently configured, by software installation/update, to benefit from a more efficient and less cumbersome process for deployment of tyre chains.

According to a fifth aspect of the invention, there is provided a non-transitory computer-readable storage medium comprising instructions, which when executed by processing circuitry, cause the processing circuitry to perform the computer-implemented method. A technical benefit may include that new vehicles and/or legacy vehicles may be conveniently configured, by software installation/update, to benefit from a more efficient and less cumbersome process for deployment of tyre chains.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the invention as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIGs. 1A** and **1B** schematically show a vehicle, according to an example.
**FIGs. 2A** to **2C** illustrate the steps of a tyre chain deployment process, according to an example.
**FIG. 3** is a flow chart of a computer-implemented method, according to an example.
**FIG. 4** is a flow chart of a computer-implemented method, according to an example.
**FIG. 5** is a schematic diagram of an exemplary computer system for implementing examples disclosed herein, according to an example.

Like reference numerals refer to like elements throughout the description.

### DETAILED DESCRIPTION

The detailed description set forth below provides information and examples of the disclosed technology with sufficient detail to enable those skilled in the art to practice the invention.

To attach tyre chains, an operator of a vehicle must typically position unconnected chains over or near the wheels of a vehicle, drive the vehicle forward or backward so that the chains are passed around the wheel, and then connect the chains so that they are attached to the wheel. This process is time consuming and cumbersome, especially in adverse weather conditions (snowy, cold, wet, etc.). Precise movement of the vehicle is required, which may be difficult due to limited space in the surroundings or traction problems caused by a slippery surface (e.g. snow or ice).

To remedy this, systems, methods and other approaches are provided for positioning at least one wheel of a vehicle to enable deployment of tyre chains (attachment or detachment of the chains to the wheel). In particular, an operator may provide inputs relating to respective steps of a tyre chain deployment process, in response to which an appropriate action may be performed. In particular, the wheel may be rotated. In some examples, a vertical load on the wheel may be decreased, and/or the vertical position of the wheel may be raised, before the wheel is rotated and the chain is attached or detached. Rotating the wheel may facilitate the process of attaching or detaching a chain, in particular in combination with lifting or reducing the load on the wheel. This reduces the time required to complete the process and can ensure sufficiently precise movement of the vehicle where necessary.

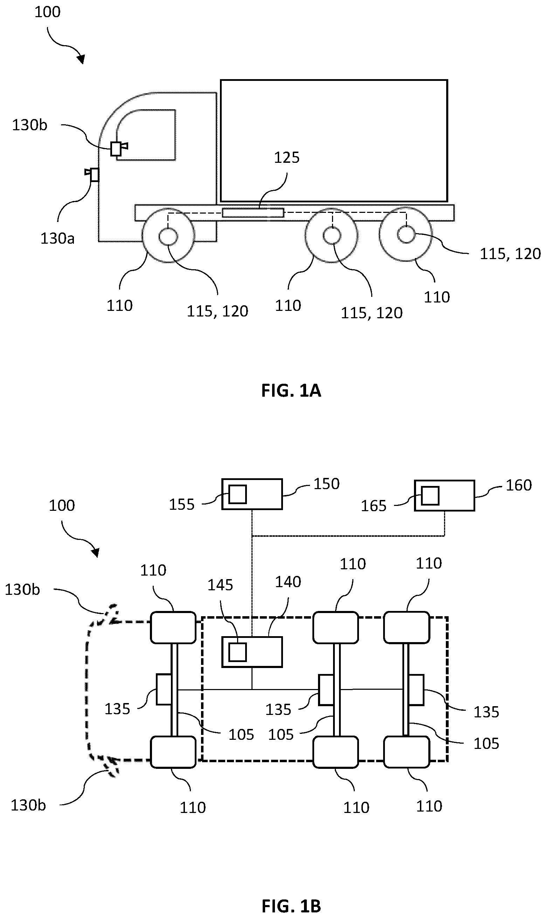

**FIGs. 1A** and **1B** schematically show an example vehicle **100** of the type considered in this disclosure. **FIG. 1A** shows a side view of the vehicle **100**, while **FIG. 1B** shows a top view of the vehicle **100**. The vehicle **100** may be any suitable form of vehicle. For example, the disclosure can be applied in heavy-duty vehicles, such as trucks, buses, and construction equipment, in personal vehicles such as cars, vans, or motorbikes, or in any other suitable form of vehicle.

The vehicle **100** comprises a number of axles **105**, each generally having two or more wheels **110.** Whilst three axles **105** are shown, it will be appreciated that any suitable number of axles **105** may be provided. It will also be appreciated that any number of the axles **105** may be driven axles. It will also be appreciated that more than two wheels **110** may be provided on each axle.

The vehicle **100** may comprise one or more sources of propulsion configured to drive, e.g. provide torque and/or steering to, one or more axles **105** or individual wheels **110** of the vehicle **100**. For example, the vehicle **100** may comprise one or more electrical machines **115** such as electric motors and/or generators. The vehicle **100** may comprise one or more batteries (not shown) configured to provide power to the electrical machines **115**. The electrical machines **115** are configured to drive one or more axles **105** or individual wheels **110** of the vehicle **100**. The electrical machines **115** can supply either a positive (propulsion) or negative (braking) force. In some examples, the vehicle **100** may also include another source of propulsion, for example an internal combustion engine (ICE). The vehicle **100** also comprises a drivetrain (not shown) to deliver mechanical power from the propulsion source (the electrical machines **115** or the ICE) to the wheels **110**.

Furthermore, the vehicle **100** may comprise one or more sets of service brakes **120**. The service brakes **120** can supply a negative (braking) force. The service brakes **120** may be, for example, frictional brakes such as pneumatic brakes. Pneumatic brakes use a compressor to fill the brake with air, which may be powered by the batteries. In some examples, the brakes may be electro-mechanical brakes.

The vehicle **100** may also comprise a suspension system **125**. The suspension system **125** may comprise components that allow relative motion between the wheels **110** and the rest of the vehicle **100** as known in the art, in order to provide a smooth ride, maintain proper wheel contact with the road surface, and ensure stable handling and control of the vehicle **100**. The suspension system **125** may be an active suspension system that uses electronic and hydraulic systems to actively control the suspension settings of the vehicle **100** in real-time, for example a gas-hydraulic active suspension system. An active suspension system may continuously adjust the suspension settings based on various inputs, such as road conditions, vehicle speed, acceleration, and braking.

In some examples, one or more cameras **130** may be disposed on the vehicle **100** in order to capture images of the vehicle **100** and its environment. For example, the vehicle **100** may comprise one or more forward facing cameras **130a** and one or more rearward-facing cameras **130b.** In this example, the vehicle **100** comprises a forward-facing camera **130a** mounted on the front of vehicle **100** and two rearward-facing cameras **130b** embodied as sideview cameras mounted on the side of the vehicle **100.** Such cameras are known in the art and may be coupled to an associated display intended to replace traditional wing mirrors. In some examples, the cameras **130** may be video cameras. It will be appreciated that any number of cameras **130** could be mounted at any suitable location on the vehicle **100**.

The vehicle **100** may also comprise a steering system **135**. The steering system **135** may comprise or more steering arrangements for each axle **105** and/or wheel **110** of the vehicle **100.** In some examples, steering system **135** may be embodied in one or more of the electrical machines **115** of the vehicle **100**. As such, the vehicle **100** can be steered by driving only certain wheels **110** while the vehicle **100** is in motion. For example, if the right side wheels **110** are driven while the left side wheels **110** are braked, a yaw moment is created. In some examples, individual axles **105** and/or wheels may be steered when the vehicle is at standstill. This can be achieved using a steered axle 105, for example using a steering system **135** such as the Volvo Dynamic Steering (VDS) system. VDS has a control unit, a hydraulic steering gear, and an electric motor. The electric motor can add a torque on the operator's steering wheel based on a request from the control unit.

The vehicle **100** may also comprise a controller **140** comprising processing circuitry **145**. The controller **140** is configured to control components of the vehicle **100**, for example the electrical machines **115**, the service brakes **120**, the suspension system **125**, and the steering system **135**. **FIG. 1B** shows a common controller **140** for all components of the vehicle **100**, however it will be appreciated that each component may have its own respective controller **140**. In many cases, the controller **140** may be implemented in the structure of the component itself. The controller **140** may be a microcontroller. In examples where the vehicle **100** is a vehicle combination, the vehicle **100** may include a global controller and a plurality of unit controllers, for example a controller for each unit.

The controller **140** may receive control signals from a computer system **150** comprising processing circuitry **155**. The computer system **150** may be a vehicle control unit configured to perform various vehicle control functions, such as vehicle motion management. The computer system **150** may be local to the vehicle **100**, or may be a remote system, implemented at a distance from the vehicle **100**. The computer system **150** may be communicatively coupled to the controller **140** in any suitable way, for example via a circuit or any other wired, wireless, or network connection known in the art. Furthermore, the communicative coupling may be implemented as a direct connection between the controller **140** and the computer system **150**, or may be implemented as a connection via one or more intermediate entities.

One function of the controller **140** and the computer system **150** is to provide control inputs for the vehicle **100**, for example motion requests for the wheels **110.** These motion requests may relate to a requested manoeuvre for the vehicle **100,** for example, straight-line driving, cornering, braking and the like. These control inputs can be provided for individual wheels **110**, meaning that the wheels **110** can be controlled independently of each other. This function can be used when positioning a wheel **110** to enable deployment of tyre chains.

The controller **140** may also receive control signals from a user device **160** comprising processing circuitry **165**. The user device **160** may be any suitable user device known in the art, for example a personal user device such as a smart phone, tablet, laptop, or the like. The user device **160** may comprise a touch screen that enables a user to input commands or instructions to the device for controlling functions of the vehicle. The user device **160** may be communicatively connected to the vehicle **100**, for example to the controller **140** and/or the computer system **150**. Furthermore, the communicative coupling may be implemented as a direct connection between the user device **160** and vehicle **100**, or may be implemented as a connection via one or more intermediate entities.

The vehicle **100** may be a vehicle combination comprising a number of units, including a tractor unit and at least one trailing unit. In some examples, the vehicle **100** may be a vehicle combination comprising a number of units, including a tractor unit and at least one trailing unit. In such examples, each unit may comprise its own electrical machines **115**, batteries, service brakes **120**, controllers **140**, and the like.

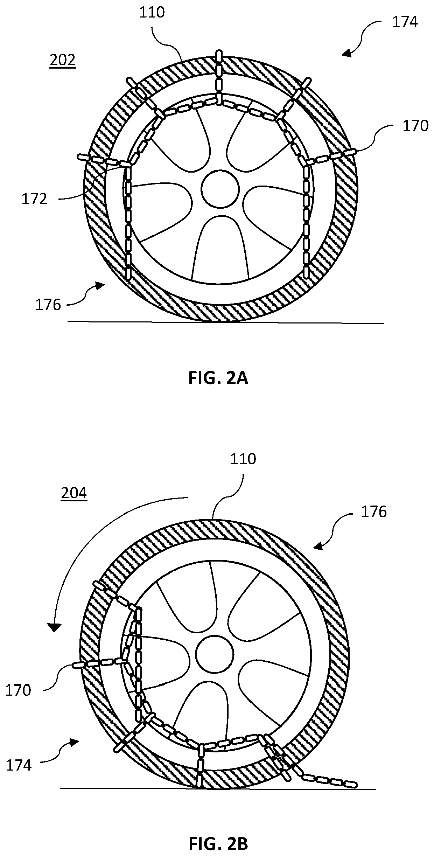

**FIGs. 2A** to **2C** illustrate the steps **202** to **206** of an example tyre chain deployment process. When performed in order, steps **202** to **206** relate to a tyre chain attachment process. It will be appreciated that, if performed in reverse, steps **202** to **206** relate to a tyre chain detachment process. As such, the term "deployment" is used herein to refer to attachment and/or detachment of tyre chains.

As shown in **FIG. 2A**, at **202**, when the vehicle **100** is at a standstill, a tyre chain **170** may be draped over a wheel **110** of the vehicle **100.** The tyre chain **170** may be held on the wheel **110** via tightening the links of the chain **170,** or may be connected to the wheel **110** at one or more connection points **172.** The connected part of the tyre chain **170** may be referred to as an assembled part **174** of the tyre chain **170.** An open or unassembled part **176** of the chain **170** may hang down from the top of the wheel **110.** This step may be performed manually by an operator of the vehicle **100,** for example after stopping the vehicle **100** and engaging the parking brake.

As shown in **FIG. 2B**, at **204,** the wheel **110** is driven such that the assembled part **174** of the tyre chain **170** is moved to a side or even under the wheel **110,** and the unassembled part **176** of the chain **170** and corresponding part of the wheel **110** are exposed and accessible. The wheel **110** may be driven either forwards or backwards relative to the normal direction of motion of the vehicle **100.** This step is usually performed by the operator entering the vehicle **100,** disengaging the parking brake, and causing a movement of the wheel **110,** for example by causing a forward or backward motion of the vehicle **100.**

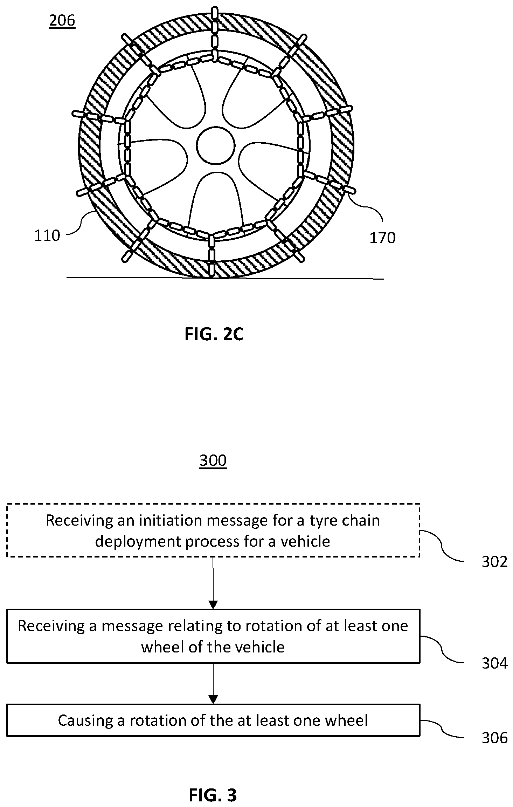

At **206,** the exposed unassembled part **176** of the chain **170** can then be connected, such that the entire chain **170** is attached to the wheel **110.** This step may again be performed manually by an operator of the vehicle **100,** for example after stopping the vehicle **100** and engaging the parking brake. The attachment of the entire chain **170** is shown in **FIG. 2C****.**

An alternative tyre chain deployment process may involve the operator of the vehicle **100** laying the chain **170** in front of or behind the wheel **110,** then driving the vehicle over the chain in order to connect the unassembled part **176** of the chain **170.**

These methods require the operator to position the unconnected chain **170** over or near the wheel **110**, enter the vehicle **100**, engage/disengage the parking brake, drive the vehicle **100** forwards or backwards so that the chain **170** is passed around the wheel **110**, and then exit the vehicle to connect the remainder of the chain **170** so it is attached to the wheel **110**. A similar process is required in reverse to remove the chain **170** from the wheel **110**. This is time consuming and cumbersome, especially in adverse weather conditions (snowy, cold, wet, etc.), where the operator may also need to remove or put on winter clothing such as gloves and a jacket. Precise movement of the vehicle **100** is required, which may be difficult due to limited space in the surroundings or traction problems caused by a slippery surface.

**FIG. 3** is a flow chart of a computer-implemented method **300** according to an example. The method **300** enables deployment of a tyre chain **170** on a wheel **110** of the vehicle **100** in an improved manner. The method **300** may be performed by the controller **140** and/or the computer system **150**, for example by the processing circuitry **145** and/or the processing circuitry **155.**

**At 302,** an initiation message for a tyre chain deployment process may be received. For example, the operator of the vehicle may put the vehicle **100** into a particular mode of operation for tyre chain deployment. To enter this mode of operation, it may be required that the vehicle **100** is at a standstill and that the parking brake is engaged. The initiation message may be generated based on an input provided to the vehicle **100** by the operator.

In some examples, the operator may interact with a user interface located in the cabin of the vehicle **100**, for example a central console or dashboard. The operator may make an input to the user interface, such as a button press, actuation of a pedal, press or flick of a switch, interaction with a touch screen, voice command captured by a microphone, visual gesture captured by a camera, or other suitable input.

Alternatively, the the operator may interact with a user interface located outside the vehicle **100**, for example with the user device **160**. The operator may make an input to the user device **160**, such as a button press, interaction with a touch screen, voice command captured by a microphone, visual gesture captured by a camera, or other suitable input. In some examples, a visual gesture may be captured by a camera **130** disposed on the vehicle **100**. In some examples, the operator input may be a predetermined operator input such as holding down a button for a predetermined time, pressing a number of buttons may be simultaneously, or making a specific sequence of inputs may in order to generate the initiation message. The operator may be provided with feedback, for example visual, audio, or tactile feedback, indicating that the initiation message has been generated and the tyre chain deployment mode has been entered.

Once the tyre chain deployment mode has been entered, the operator may position the tyre chain **170** accordingly. For example, the tyre chain **170** may be draped over at least one wheel **110** of the vehicle **100**, as in **202**, or laid in front of or behind the wheel **110**. The wheel **110** to which the chain **170** is to be attached is typically a driven wheel of the vehicle **100**, as these are the wheels that provide traction for the vehicle **100.** In some examples, a chain **170** may be attached to a single wheel **110** of the vehicle **100**, whilst in other examples the chain **170** may be attached to multiple wheels **110** of the vehicle **100**, for example two wheels **110** on a common axle **105** of the vehicle **100**, or indeed wheels **110** on a multiple axles **105** of the vehicle **100**, for example driven axles.

At **304**, a message is received relating to a wheel rotation step of a tyre chain deployment process for a vehicle. For example, a message may be received relating to a rotation of at least one wheel **110** of the vehicle **100**. In some examples, an initiation message is not required, and a tyre chain deployment process may be initiated based only on receiving a suitable message at **304.** The message may specify that at least one wheel **110** or axle **105** of the vehicle **100** is to be rotated, for example in a longitudinal direction.

The message may be generated based on an input provided by the operator. For example, the operator may interact with a user interface located inside or outside of the vehicle **100**, in the same manner discussed in relation to **302**. In examples where the operator interacts with a user interface located outside of the vehicle **100**, the operator does not need to re-enter the vehicle after positioning the chain **170**. In some examples, the operator may make an input to the user device **160**, such as a button press, interaction with a touch screen, voice command captured by a microphone, visual gesture captured by a camera, or other suitable input. In some examples, a visual gesture may be captured by a camera **130** disposed on the vehicle **100**, for example a rearward-facing camera **130b.**

The operator input may correspond to one or more particular wheels **110** or axles **105.** For example, a particular button may be pressed in an application on a user device, a particular voice command may be given, or a particular gesture may be made, that specifies which wheels **110** or axles **105** are to be rotated. In some examples, the operator input may correspond to all driven wheels **110** or axles **105** of the vehicle **100.** As such, a message may be generated relating to rotation of one or more specific wheels **110** or axles **105** of the vehicle **100.**

The operator input may correspond to a particular angular rotation of a wheel **110.** For example, a particular button may be pressed in an application on a user device, a particular voice command may be given, or a particular gesture may be made, that specifies a number of degrees through which the wheel **110** is to be rotated. For example, it may be specified that the wheel **110** should be rotated a suitable number of degrees to expose the unassembled part **176** of the chain **170**, as in **204**. The number of degrees may be any appropriate value, for example 80 degrees. As such, a message may be generated correspond to a specific rotation of a wheel **110** or axle **105** of the vehicle **100**. Enabling a precise rotation of the wheel **110** is advantageous when there is limited space in the surroundings or there are traction problems caused by a slippery surface.

At **306**, in response to receiving the message at **304**, a rotation of the at least one wheel **110** of the vehicle **100** is caused. In particular, a rotation of the wheel **110** may be caused that exposes the unassembled part **176** of the chain **170** and corresponding part of the wheel **110**, as in **204**. The rotation may be provided by actuators associated with the wheel, for example one or more electrical machines **115** or service brakes **120**. As tyre chains **170** are typically attached to a driven wheel **110** or axle **105** of the vehicle **100**, it is possible to use the existing propulsion systems in the vehicle **100**.

In some examples, a specific angular rotation of the at least one wheel **110** of the vehicle **100** is caused. For example, a specific angular rotation may be contained in the message at **304,** as discussed above. In some examples, a default angular rotation may be set, which is then implemented in response to receiving the message at **304**. In the case of an electric motor, a particular angular rotation of the motor corresponds to a particular angular rotation of the wheel **110.** The person skilled in the art will understand how to determine the specific angular rotation of the motor based on parameters such as wheel circumference and gear ratio. Accurate rotation of the wheel **110** can enable simpler connection of the chain **170** as it can be ensured that the unassembled part **176** of the chain **170** and corresponding part of the wheel **110** are in the correct position for the operator to connect the chain **170.** Enabling a precise rotation of the wheel **110** is advantageous when there is limited space in the surroundings or there are traction problems caused by a slippery surface. Anti-lock braking systems (ABS), anti-slip-regulation (ASR), or other traction control strategies may also be implemented to take wheel slip into account when necessary (e.g. on low friction surfaces such as ice or mud).

In some examples, if the resultant rotation of the wheel **110** is not sufficient, for example if the unassembled part **176** of the chain **170** and corresponding part of the wheel **110** are not adequately exposed, the operator may be enabled to make an additional input specifying a further rotation of the wheel **110.** In some examples, a the operator may be able to input a specific further rotation, whilst in other examples, a default further rotation may be set, for example 10 degrees, which is then implemented in response to an additional input and corresponding message.

Once the wheel **110** has been rotated, the operator may connect the exposed unassembled part **176** of the chain **170**, such that the entire chain **170** is attached to the wheel **110.** As such, the tyre chain deployment process can be completed without the operator having to re-enter the vehicle, which is more efficient as there is no need for the operator to enter the vehicle **100,** engage/disengage the parking brake, drive the vehicle **100** forwards or backwards so that the chain **170** is passed around the wheel **110**, and then exit the vehicle to connect the remainder of the chain **170**.

Whilst the tyre chain deployment process disclosed in relation to **FIG. 3** relates to attachment of a chain **170**, it will be appreciated that it can also be applied in order to detach a chain **170** from a wheel **110**. For example, the operator may detach or decouple part of the chain **170** before making an input relating to rotation of the wheel **110** at **304**. The rotation may then be caused at **306**, enabling the operator to remove the entire chain **170** from the wheel 110.

In some examples, other functions relating to the wheel **110** may also be performed as part of the tyre chain deployment process. These may be caused in response to receiving the message at **304,** or in response to receiving specific messages relating to particular functions.

In some examples, braking of one or more other wheels **110** of the vehicle **100** is caused while the specified wheel **110** or axle **105** is rotated. This can be performed, for example, in vehicles **100** with an open differential (or with an unlocked locking differential). This ensures the vehicle **100** remains stable while the wheel **110** is rotated. This also means that the vehicle **100** does not move while the wheel **110** is rotated, which is advantageous in instances where there is limited space. This is particularly useful in the case of large vehicles such as trucks, buses, construction equipment, and the like.

In some examples, a steering angle is applied to the specified wheel **110** or axle **105**. For example, the steering system **135** may be caused to apply a steering angle one or more wheels **110** or axles **105**. For example, a steering angle can be applied to a steered axle **105** by providing a torque request to an electrical machine **115** of the steered steered axle **105**, e.g. based on a request from a control unit of a VDS system. By applying a steering angle, a wheel **110** can be turned inwards or outwards to provide better access to the connections of the chain **170** and corresponding part of the wheel **110**. Any suitable steering angle may be applied, for example a predefined angle or maximum steering capability. Wheels **110** on opposite sides of the vehicle **100** may be turned in opposite directions to provide better access to the connections of the chain **170** on both sides of the vehicle **100.**

In some examples, a vertical load on the specified wheel **110** or axle **105** may be reduced. For example, the suspension system **125**, such as an active suspension system, may be caused to reduce the load on one or more wheels **110** or axles **105.** By reducing the load on a wheel **110** or axle **105**, the wheels **110** can be rotated more easily, for example without moving the vehicle **100**, which is advantageous in instances where there is limited space. At the end of the tyre chain deployment process, the vertical load may be increased to the previous level or a normal level for operation of the vehicle.

In some examples, a vertical position of the specified wheel **110** or axle **105** may be raised. For example, the suspension system **125**, for example an active suspension system, may be caused to raise the position of one or more wheels **110** or axles **105**. By raising the vertical position of a wheel **110** or axle **105**, the wheels **110** can be rotated without moving the vehicle **100** and traction problems due to slippery surfaces are avoided. At the end of the tyre chain deployment process, the vertical position may be lowered to the previous or normal level. In the case that the vehicle **100** has more than three wheels **110**, raising an individual wheel **110** will not compromise the stability of the vehicle **100** as there will still be three points of contact on the ground. Similarly, in the case that the vehicle **100** has more than two axles **105,** raising an individual axle **105** will not compromise the stability of the vehicle **100.**

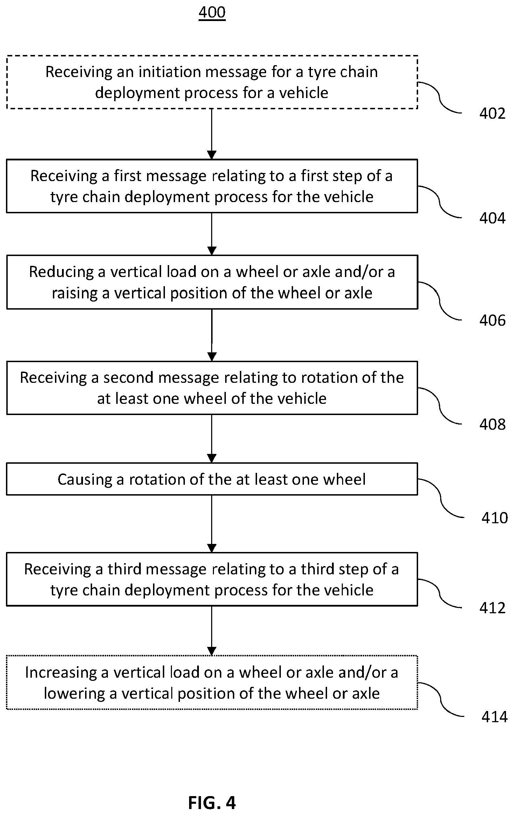

**FIG. 4** is a flow chart of a computer-implemented method **400** according to an example. The method **400** includes a number of different functions and enables deployment of a tyre chain **170** on a wheel **110** of the vehicle **100** in an improved manner. The method **400** may be performed by the controller **140** and/or the computer system **150,** for example by the processing circuitry **145** and/or the processing circuitry **155.**

At **402,** an initiation message for a tyre chain deployment process may be received. For example, the operator of the vehicle may put the vehicle **100** into a particular mode of operation for tyre chain deployment. To enter this mode of operation, it may be required that the vehicle **100** is at a standstill and that the parking brake is engaged. The initiation message may be generated based on an input provided to the vehicle **100** by the operator. The generation and implementation of the initiation message may be performed in substantially the same manner as discussed in relation to the method **300.** The operator may position the tyre chain **170,** for example drape the tyre chain **170** over at least one wheel **110** of the vehicle **100**, before or after the initiation message is generated.

At **404,** a first message is received relating to a first step of a tyre chain deployment process for the vehicle **100.** In some examples, an initiation message is not required, and a tyre chain deployment process may be initiated based only on receiving a suitable input at **404**. The first message may specify that a vertical load on at least one wheel **110** or axle **105** of the vehicle **100** is to be reduced, and/or that the vertical position of at least one wheel **110** or axle **105** of the vehicle **100** is to be raised.

The first message may be generated based on an input provided by the operator. For example, the operator may interact with a user interface located inside or outside of the vehicle **100**, in the same manner discussed in relation to the method **300**. In examples where the operator interacts with a user interface located outside of the vehicle **100**, the operator does not need to re-enter the vehicle after positioning the chain **170**. The operator input may correspond to one or more particular wheels **110** or axles **105** of the vehicle **100**. As such, a message may be generated relating to one or more specific wheels **110** or axles **105** of the vehicle **100**.

At **406**, in response to receiving the first message at **404**, a vertical load on a wheel **110** or axle **105** may be reduced and/or a vertical position of the wheel **110** or axle **105** may be raised. For example, the suspension system **125**, for example an active suspension system, may be caused to reduce the load on one or more wheels **110** or axles **105** and/or raise the position of one or more wheels **110** or axles **105**. In some examples, the operator may then position the tyre chain **170** accordingly. For example, the tyre chain **170** may be draped over at least one wheel **110** of the vehicle **100**, as in **202**, or laid in front of or behind the wheel **110**. The operator may position the tyre chain **170**, for example drape the tyre chain **170** over at least one wheel **110** of the vehicle **100**, before or after the first message is generated or the corresponding action is performed.

At **408**, a second message is received relating to a second step of a tyre chain deployment process for the vehicle **100**. The second message relates to a wheel rotation step. In particular, the second message may relate to a rotation of the wheel **110** or axle **105** for which the vertical load has been reduced and/or the vertical position has been raised at **406,** although it may additionally or alternatively relate to one or more other wheels **110** or axles **105** of the vehicle **100.** The second message may be generated based on an input provided by the operator. For example, the operator may interact with a user interface located inside or outside of the vehicle **100,** in the same manner discussed in relation to the method **300.** In examples where the operator interacts with a user interface located outside of the vehicle **100,** the operator does not need to re-enter the vehicle after positioning the chain **170.** The operator input may correspond to a particular wheel **110** or axle **105** of the vehicle **100** and/or to a specific rotation of a wheel **110** or axle **105.** As such, a message may be generated relating to rotation of a one or more specific wheels **110** or axles **105** of the vehicle **100,** and/or to a specific rotation of a wheel **110** or axle **105**.

At **410**, in response to receiving the second message at **408**, a rotation of the at least one wheel **110** of the vehicle **100** is caused. In particular, a rotation of the wheel **110** may be caused that exposes the unassembled part **176** of the chain **170**, as in **204**. The rotation may be provided by actuators associated with the wheel **110**, for example one or more electrical machines **115** or service brakes **120**. As tyre chains **170** are typically attached to a driven wheel **110** or axle **105** of the vehicle **100**, it is possible to use the existing propulsion systems in the vehicle **100**. Once a wheel **110** has been rotated, the operator may connect the exposed unassembled part **176** of the chain **170**, such that the entire chain **170** is attached to the wheel **110.**

In some examples, a specific angular rotation of the at least one wheel **110** of the vehicle **100** is caused. In some examples, if the resultant rotation of the wheel **110** is not sufficient, for example if the unassembled part **176** of the chain **170** is not adequately exposed, the operator may be enabled to make an additional input specifying a further rotation of the wheel **110.** In some examples, braking of one or more other wheels **110** of the vehicle **100** is caused while the specified wheel **110** or axle **105** is rotated. In some examples, a steering angle is applied to the specified wheel **110** or axle **105.** These function may be implemented in the same manner as discussed in relation to the method **300.**

At **412**, a third message is received relating to a third step of a tyre chain deployment process for the vehicle **100.** The third message may specify that a vertical load on at least one wheel **110** or axle **105** of the vehicle **100** is to be increased and/or that the vertical position of at least one wheel **110** or axle **105** of the vehicle **100** is to be lowered. In particular, the third message may relate to the wheel **110** or axle **105** for which the vertical load has been reduced and/or the vertical position has been raised at **406,** although it may additionally or alternatively relate to one or more other wheels **110** or axles **105** of the vehicle **100.** The third message may be generated based on an input provided by the operator. For example, the operator may interact with a user interface located inside or outside of the vehicle **100,** in the same manner discussed in relation to the method **300**.

At **414**, in response to receiving the third message at **412,** a vertical load on the wheel **110** or axle **105** may be increased and/or the vertical position of the wheel **110** or axle **105** may be lowered. For example, the suspension system **125,** for example an active suspension system, may be caused to increase the load on one or more wheels **110** or axles **105** and/or lower the position of one or more wheels **110** or axles **105.**

The method **400** therefore enables a tyre chain deployment process that can be completed without the operator having to re-enter the vehicle, which is more efficient as there is no need for the operator to enter the vehicle **100**, engage/disengage the parking brake, drive the vehicle **100** forwards or backwards so that the chain **170** is passed around the wheel **110**, and then exit the vehicle to connect the remainder of the chain **170**. By reducing a vertical load on a wheel **110** and/or raising a vertical position of the wheel **110** before it is rotated, the wheel **110** can be rotated more easily, for example without moving the vehicle **100.** This is advantageous in instances where there is limited space. Traction problems due to slippery surfaces are thus avoided.

Whilst the tyre chain deployment process disclosed in relation to **FIG. 4** relates to attachment of a chain **170**, it will be appreciated that it can also be applied in order to detach a chain **170** from a wheel **110**. For example, the operator may detach or decouple part of the chain **170** before making an input.

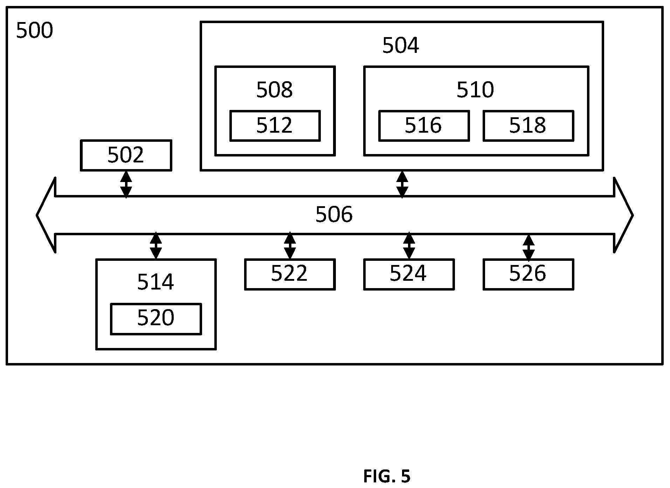

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN, an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510**, which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514**, which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502**. In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502**. The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

The scope of the invention is set forth in the following claims.

## Claims

1. A computer system (140, 150) comprising processing circuitry (145, 155) configured to:
receive a message relating to a wheel rotation step of a tyre chain deployment process for a vehicle (100); and
in response to receiving the message, cause a rotation of at least one wheel (110) of the vehicle (100).

2. The computer system (140, 150) of claim 1, wherein the rotation is a specific angular rotation of the at least one wheel (110) of the vehicle (100).

3. The computer system (140, 150) of claim 1 or 2, wherein the processing circuitry (145, 155) is further configured to cause braking of one or more other wheels (110) of the vehicle (100) while the at least one wheel (110) is rotated.

4. The computer system (140, 150) of any of claims 1-3, wherein the processing circuitry (145, 155) is further configured to cause a steering angle to be applied to the at least one wheel (110) of the vehicle (100).

5. The computer system (140, 150) of any of claims 1-4, wherein the processing circuitry (145, 155) is further configured to cause a vertical load on at least one wheel (110) of the vehicle (100) to be decreased or increased.

6. The computer system (140, 150) of any of claims 1-5, wherein the processing circuitry (145, 155) is further configured to cause a vertical position of at least one wheel (110) of the vehicle (100) to be raised or lowered.

7. The computer system (140, 150) of any of claims 1-6, wherein the processing circuitry (145, 155) is configured to:
receive a first message relating to a first step of the tyre chain deployment process for the vehicle (100);
in response to receiving the first message, cause a vertical load on at least one wheel (110) of the vehicle (100) to be decreased and/or a vertical position of at least one wheel (110) of the vehicle (100) to be raised;
receive the message relating to a wheel rotation step as a second message relating to a second step of the tyre chain deployment process for the vehicle (100);
in response to receiving the second message, cause the rotation of the at least one wheel (110) of the vehicle (100);
receive a third message relating to a third step of the tyre chain deployment process for the vehicle (100); and
in response to receiving the third message, cause a vertical load on the at least one wheel (110) of the vehicle (100) to be increased and/or a vertical position of the at least one wheel (110) of the vehicle (100) to be lowered.

8. The computer system (140, 150) of any of claims 1-7, wherein the processing circuitry (145, 155) is configured to receive the message via a user interface of the vehicle (100) or a user device (160) of a vehicle operator.

9. The computer system (140, 150) of any of claims 1-8, wherein the message comprises a user input to a touch screen, a user gesture captured by a camera (130), or a voice command captured by a microphone.

10. The computer system (140, 150) of any of claims 1-9, wherein the at least one wheel (110) of the vehicle (100) is an individual wheel (110) of the vehicle (100) or comprises two wheels (110) on a common axle (105) of the vehicle (100).

11. The computer system (140, 150) of any of claims 1-10, wherein the at least one wheel (110) of the vehicle (100) is a driven wheel (110) of the vehicle (100).

12. A vehicle (100) comprising the computer system (140, 150) of any preceding claim.

13. A computer-implemented method (300, 400) comprising, by processing circuitry (145, 155) of a computer system (140, 150):
receiving (304, 408) a message relating to a wheel rotation step of a tyre chain deployment process for a vehicle (100); and
in response to receiving the message, causing (306, 410) a rotation of at least one wheel (110) of the vehicle (100).

14. A computer program product comprising program code for performing, when executed by processing circuitry (145, 155), the computer-implemented method (300, 400) of claim 13.

15. A non-transitory computer-readable storage medium comprising instructions, which when executed by processing circuitry (145, 155), cause the processing circuitry to perform the computer-implemented method (300, 400) of claim 13.

## Patentansprüche

1. Rechnersystem (140, 150), umfassend eine Verarbeitungsschaltung (145, 155) die zu Folgendem konfiguriert ist:
Empfangen einer Nachricht, die sich auf einen Raddrehungsschritt eines Reifenketteneinsatzprozesses für ein Fahrzeug (100) bezieht; und
als Reaktion auf ein Empfangen der Nachricht, Bewirken einer Drehung von mindestens einem Rad (110) des Fahrzeugs (100).

2. Rechnersystem (140, 150) nach Anspruch 1, wobei die Drehung eine bestimmte Winkeldrehung des mindestens einen Rads (110) des Fahrzeugs (100) ist.

3. Rechnersystem (140, 150) nach Anspruch 1 oder 2, wobei die Verarbeitungsschaltung (145, 155) ferner konfiguriert ist, um ein Abbremsen eines oder mehrerer anderer Räder (110) des Fahrzeugs (100) zu bewirken, während das mindestens eine Rad (110) gedreht wird.

4. Rechnersystem (140, 150) nach einem der Ansprüche 1 bis 3, wobei die Verarbeitungsschaltung (145, 155) ferner konfiguriert ist, um ein Anwenden eines Lenkwinkels auf das mindestens eine Rad (110) des Fahrzeugs (100) zu bewirken.

5. Rechnersystem (140, 150) nach einem der Ansprüche 1 bis 4, wobei die Verarbeitungsschaltung (145, 155) ferner konfiguriert ist, um zu bewirken, dass eine vertikale Last auf mindestens ein Rad (110) des Fahrzeugs (100) verringert oder erhöht wird.

6. Rechnersystem (140, 150) nach einem der Ansprüche 1 bis 5, wobei die Verarbeitungsschaltung (145, 155) ferner konfiguriert ist, um eine vertikale Position von mindestens einem Rad (110) des Fahrzeugs (100) anzuheben oder abzusenken.

7. Rechnersystem (140, 150) nach einem der Ansprüche 1-6, wobei die Verarbeitungsschaltung (145, 155) ferner zu Folgendem konfiguriert ist:
Empfangen einer ersten Nachricht, die sich auf einen ersten Schritt des Reifenketteneinsatzprozesses für das Fahrzeug (100) bezieht;
als Reaktion auf ein Empfangen der ersten Nachricht, Bewirken, dass eine vertikale Last auf mindestens ein Rad (110) des Fahrzeugs (100) verringert wird und/oder eine vertikale Position mindestens eines Rads (110) des Fahrzeugs (100) angehoben wird;
Empfangen der Nachricht, die sich auf einen Raddrehungsschritt bezieht, als eine zweite Nachricht, die sich auf einen zweiten Schritt des Reifenketteneinsatzprozesses für das Fahrzeug (100) bezieht;
als Reaktion auf ein Empfangen der zweiten Nachricht, Bewirken der Drehung des mindestens einen Rads (110) des Fahrzeugs (100);
Empfangen einer dritten Nachricht, die sich auf einen dritten Schritt des Reifenketteneinsatzprozesses für das Fahrzeug (100) bezieht; und
als Reaktion auf ein Empfangen der dritten Nachricht, Bewirken, dass eine vertikale Last auf das mindestens eine Rad (110) des Fahrzeugs (100) erhöht wird, und/oder eine vertikale Position des mindestens einen Rads (110) des Fahrzeugs (100) abgesenkt wird.

8. Rechnersystem (140, 150) nach einem der Ansprüche 1 bis 7, wobei die Verarbeitungsschaltung (145, 155) konfiguriert ist, um die Nachricht über eine Benutzeroberfläche des Fahrzeugs (100) oder eine Benutzervorrichtung (160) eines Fahrzeugbetreibers zu empfangen.

9. Rechnersystem (140, 150) nach einem der Ansprüche 1-8, wobei die Nachricht eine Benutzereingabe an einem Touchscreen, eine von einer Kamera (130) erfasste Benutzergeste oder einen von einem Mikrofon erfassten Sprachbefehl umfasst.

10. Rechnersystem (140, 150) nach einem der Ansprüche 1-9, wobei das mindestens eine Rad (110) des Fahrzeugs (100) ein einzelnes Rad (110) des Fahrzeugs (100) ist oder zwei Räder (110) auf einer gemeinsamen Achse (105) des Fahrzeugs (100) umfasst.

11. Rechnersystem (140, 150) nach einem der Ansprüche 1-10, wobei das mindestens eine Rad (110) des Fahrzeugs (100) ein angetriebenes Rad (110) des Fahrzeugs (100) ist.

12. Fahrzeug (100), umfassend das Rechnersystem (140, 150) nach einem der vorherigen Ansprüche.

13. Rechnerimplementiertes Verfahren (300, 400), umfassend, durch eine Verarbeitungsschaltung (145, 155) eines Rechnersystems (140, 150):
Empfangen (304, 408) einer Nachricht, die sich auf einen Raddrehungsschritt eines Reifenketteneinsatzprozesses für ein Fahrzeug (100) bezieht; und
als Reaktion auf ein Empfangen der Nachricht, Bewirken (306, 410) einer Drehung von mindestens einem Rad (110) des Fahrzeugs (100).

14. Rechnerprogrammprodukt, umfassend Programmcode, um bei Ausführung durch eine Verarbeitungsschaltung (145, 155) das recherimplementierte Verfahren (300, 400) nach Anspruch 13 durchzuführen.

15. Nicht-transitorisches, recherlesbares Speichermedium, umfassend Anweisungen, die, wenn sie von einer Verarbeitungsschaltung (145, 155) ausgeführt werden, die Verarbeitungsschaltung veranlassen, das recherimplementierte Verfahren (300, 400) nach Anspruch 13 durchzuführen.

## Revendications

1. Système informatique (140, 150) comprenant un circuit de traitement (145, 155) configuré pour :
recevoir un message relatif à une étape de rotation de roue d'un processus de déploiement de chaîne de pneumatique pour un véhicule (100) ; et
en réponse à la réception du message, mettre en rotation au moins une roue (110) du véhicule (100).

2. Système informatique (140, 150) selon la revendication 1, dans lequel la rotation est une rotation angulaire spécifique de l'au moins une roue (110) du véhicule (100).

3. Système informatique (140, 150) selon la revendication 1 ou 2, dans lequel le circuit de traitement (145, 155) est en outre configuré pour provoquer le freinage d'une ou de plusieurs autres roues (110) du véhicule (100) pendant que l'au moins une roue (110) est mise en rotation.

4. Système informatique (140, 150) selon l'une quelconque des revendications 1 à 3, dans lequel le circuit de traitement (145, 155) est en outre configuré pour appliquer un angle de braquage à au moins une roue (110) du véhicule (100).

5. Système informatique (140, 150) selon l'une quelconque des revendications 1 à 4, dans lequel le circuit de traitement (145, 155) est en outre configuré pour diminuer ou augmenter une charge verticale sur au moins une roue (110) du véhicule (100).

6. Système informatique (140, 150) selon l'une quelconque des revendications 1 à 5, dans lequel le circuit de traitement (145, 155) est en outre configuré pour faire monter ou descendre la position verticale d'au moins une roue (110) du véhicule (100).

7. Système informatique (140, 150) selon l'une quelconque des revendications 1 à 6, dans lequel le circuit de traitement (145, 155) est configuré pour :
recevoir un premier message relatif à une première étape du processus de déploiement de chaîne de pneumatique pour le véhicule (100) ;
en réponse à la réception du premier message, provoquer une diminution d'une charge verticale sur au moins une roue (110) du véhicule (100) et/ou une augmentation d'une position verticale d'au moins une roue (110) du véhicule (100) ;
recevoir le message relatif à une étape de rotation de roue en tant que deuxième message relatif à une deuxième étape du processus de déploiement de chaîne de pneumatique pour le véhicule (100) ;
en réponse à la réception du deuxième message, mettre en rotation l'au moins une roue (110) du véhicule (100) ;
recevoir un troisième message relatif à une troisième étape du processus de déploiement de chaîne de pneumatique pour le véhicule (100) ; et
en réponse à la réception du troisième message, provoquer une augmentation d'une charge verticale sur l'au moins une roue (110) du véhicule (100) et/ou une diminution d'une position verticale de l'au moins une roue (110) du véhicule (100).

8. Système informatique (140, 150) selon l'une quelconque des revendications 1 à 7, dans lequel le circuit de traitement (145, 155) est configuré pour recevoir le message par l'intermédiaire d'une interface utilisateur du véhicule (100) ou d'un dispositif utilisateur (160) d'un conducteur de véhicule.

9. Système informatique (140, 150) selon l'une quelconque des revendications 1 à 8, dans lequel le message comprend une entrée de l'utilisateur sur un écran tactile, un geste de l'utilisateur capturé par une caméra (130) ou une commande vocale capturée par un microphone.

10. Système informatique (140, 150) selon l'une quelconque des revendications 1 à 9, dans lequel l'au moins une roue (110) du véhicule (100) est une roue individuelle (110) du véhicule (100) ou comprend deux roues (110) sur un essieu commun (105) du véhicule (100).

11. Système informatique (140, 150) selon l'une quelconque des revendications 1 à 10, dans lequel l'au moins une roue (110) du véhicule (100) est une roue motrice (110) du véhicule (100).

12. Véhicule (100) comprenant le système informatique (140, 150) selon l'une quelconque des revendications précédentes.

13. Procédé mis en œuvre par ordinateur (300, 400) comprenant, par le circuit de traitement (145, 155) d'un système informatique (140, 150) :
la réception (304, 408) d'un message relatif à une étape de rotation de roue d'un processus de déploiement de chaîne de pneumatique pour un véhicule (100) ; et
en réponse à la réception du message, la mise (306, 410) en rotation d'au moins une roue (110) du véhicule (100).

14. Produit de programme informatique comprenant un code de programme pour exécuter, lorsqu'il est exécuté par le circuit de traitement (145, 155), le procédé mis en œuvre par ordinateur (300, 400) selon la revendication 13.

15. Support de stockage non transitoire lisible par ordinateur comprenant des instructions qui, lorsqu'elles sont exécutées par le circuit de traitement (145, 155), amènent le circuit de traitement à exécuter le procédé mis en œuvre par ordinateur (300, 400) selon la revendication 13.
